(19) Europäisches Patentamt
European Patent Office
Office européen des brevets

(11) **EP 3 056 897 A1**

(12) **EUROPÄISCHE PATENTANMELDUNG**

(43) Veröffentlichungstag:
**17.08.2016 Patentblatt 2016/33**

(51) Int Cl.:
***G01N 27/83*** *(2006.01)*

(21) Anmeldenummer: **16155396.1**

(22) Anmeldetag: **12.02.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **13.02.2015 DE 102015102093**

(71) Anmelder: **Pentacon Gmbh Foto- Und Feinwerktechnik**
**01277 Dresden (DE)**

(72) Erfinder: **RAMLOW, Karl**
**01909 Grossharthau-Seeligstadt (DE)**

(74) Vertreter: **Riechelmann & Carlsohn Patentanwälte**
**Wiener Straße 91**
**01219 Dresden (DE)**

(54) **VERFAHREN UND VORRICHTUNG ZUR PRÜFUNG VON FERROMAGNETISCHEN WERKSTÜCKEN AUF INHOMOGENITÄTEN, INSBESONDERE AUF RISSE UND/ODER SCHLEIFBRAND**

(57) Die Erfindung betrifft ein Verfahren zur Prüfung von Werkstücken (1, 21) aus einem ferromagnetischen Material, die eine Außenseite und eine Innenseite aufweisen, insbesondere von Ringen, auf Inhomogenitäten. Dabei ist vorgesehen, dass mittels eines Magnetfeldsensors (12) die remanente magnetische Feldstärke an dem Werkstück (1, 21) ortsabhängig gemessen wird, wobei der Magnetfeldsensor (12) und das Werkstück (1, 21) relativ zueinander bewegt werden und der Gradient der Änderung des Magnetfeldes bestimmt wird. Eine Fremderregung erfolgt dabei nicht. Bei den Inhomogenitäten kann es sich insbesondere um Risse, um Schleifbrand, um Materialveränderungen unterhalb der Oberflächen von Werkstücken, um sogenannte Spannungszonen (stress concentration zones - SCZ) im Material oder Kombinationen dieser Inhomogenitäten handeln.

Fig. 1

EP 3 056 897 A1

**Beschreibung**

Die Erfindung betrifft ein Verfahren und eine Vorrichtung zur Prüfung von ferromagnetischen Werkstücken, insbesondere von Ringen wie Synchronringen für Getriebe und Lagerringen, auf Inhomogenitäten, insbesondere auf Risse und/oder Schleifbrand. In einer ersten Ausführungsform betrifft die Erfindung insbesondere ein Verfahren und eine Vorrichtung zur Rissprüfung von ferromagnetischen Werkstücken, insbesondere von Synchronringen für Getriebe. In einer zweiten Ausführungsform betrifft die Erfindung ein Verfahren und eine Vorrichtung zur Detektion von Schleifbrand, insbesondere an Lagerringen wie Kugellagerringen.

Synchronringe für Getriebe sind geometrisch komplizierte Gebilde, die z. B. durch Schmieden, Stanzen oder Sintern hergestellt werden können. Als Materialien kommen in der Regel Messing, Stahl und Sintermetall zum Einsatz, wobei der überwiegende Teil von Synchronringen aus Messing besteht.

Zur einwandfreien Funktion der im Getriebe stark mechanisch belasteten Synchronringe sind sowohl die Vollständigkeit der Ringstruktur, eine einwandfreie Oberflächenbeschaffenheit sowie deren strukturelle Unversehrtheit - hier besonders die Rissfreiheit - von Bedeutung.

Zur Qualitätssicherung werden daher üblicherweise in der Synchronringproduktion Kontrollautomaten eingesetzt, die die Parameter Vollständigkeit, Oberflächengüte und Rissfreiheit untersuchen. Solche Automaten kommen wegen des Hauptmarktanteils von Messingsynchronringen aktuell nur für diese zur Anwendung.

Bei der Entwicklung der Kontrollautomaten wurden für die Rissprüfung bekannte zerstörungsfreie Prüfverfahren, wie Farbeindringverfahren, Ultraschallprüfung, Wirbelstromprüfung, thermografische Verfahren oder Röntgenprüfung untersucht. Alle diese Verfahren waren entweder zu aufwendig oder brachten nicht die geforderten Ergebnisse.

Als Stand der Technik hat sich auf Basis dieser Erfahrungen die akustische Prüfung der Messingsynchronringe etabliert. Hierbei wird der Prüfling durch eine Art Klöppel zum Schwingen angeregt. Die durch ein Mikrofon aufgenommenen Signale werden ausgewertet und gestatten sichere Rückschlüsse auf den Zustand des Synchronringes in Bezug auf Risse.

DE 10 2012 002 127 B3 offenbart ein Verfahren und eine Anordnung zur Rissprüfung, die durch differentielle Oberflächenabtastung realisiert wird. Dieses Verfahren scheidet auf Grund der komplizierten geometrischen Formen von Synchronringen für diese aus.

Durch zunehmende Verschiebung der Marktanteile von Messingsynchronringen zu Stahlsynchronringen sind nunmehr auch Kontrollautomaten für Stahlsynchronringe zu entwickeln. Während die Parameter Vollständigkeit der Ringe und Oberflächengüte mit bekannten Anordnungen und Verfahren der Kontrollautomaten für Messingsynchronringe abgedeckt werden können, versagt die akustische Prüfung auf Risse. Die durch die magnetischen Eigenschaften der Stahlsynchronringe aus dem Arsenal der zerstörungsfreien Prüfverfahren nunmehr mögliche Magnetpulverprüfung scheidet auf Grund des hohen Aufwandes vor dem Hintergrund eines geforderten Kontrolldurchsatzes von ca. 1000 Prüflingen pro Stunde aus.

Bei Schleifbrand handelt es sich um Bereiche einer geschliffenen Fläche, in denen die molekulare oder atomare Struktur des bearbeiteten Werkstoffs von der der übrigen Bereiche abweicht. Nach ISO 14104 in der Fassung vom Juni 2014 werden dabei konkret lokal überhitzte, oberflächennahe Bereiche verstanden. Diese lokale Überhitzung führt zu Anlassvorgängen oder sogar zu sogenannten Neuhärtezonen. Damit einher geht eine Versprödung der betroffenen Bereiche, was wiederum die Belastbarkeit dieser Bereiche und damit die Lebensdauer der davon betroffenen Produkte einschränkt. Das macht sich besonders bei stark belasteten Oberflächen z. B. an Zahnrädern oder Kugellagern bemerkbar.

Auf Grund der Tatsache, dass Schleifbrand technologisch nicht vermeidbar ist und statistisch auftritt, ist die Kontrolle geschliffener Flächen bei vielen Erzeugnissen im Interesse einer Qualitätssicherung angezeigt. Dabei setzt man sowohl im Schleifprozess als auch am fertigen Produkt mit unterschiedlichen Verfahren an. Grundsatz hierbei ist, dass die Kontrolle zerstörungsfrei vorgenommen wird.

Im Schleifprozess wird z. B. vorgeschlagen, eine thermische Überbeanspruchung des Werkstücks durch Temperaturmessung an der Schleifscheibe zu vermeiden (DE 40 25 552 C1) oder eine mechanische Vorrichtung zum Einsatz zu bringen, die die Vorschubgeschwindigkeit der Schleifspindel so begrenzt, dass keine Überhitzungen auftreten können (DE 41 19 871 C1 und DE 43 18 102 A1). Auch ein Verfahren zur Messung dielektrischer Funktionen der Schleifscheibe im Schleifprozess (DE 195 44 620 A1) wurde für die Vermeidung von Schleifbrand entwickelt.

Verfahren, die im Schleifprozess ansetzen, leiden unter der Komplexität des Schleifprozesses, der in seiner Umfänglichkeit nicht erfasst werden kann und in dem die Parametergrenze ab Schleifbrandentstehung sowohl schwer zu definieren als auch schwer zu finden ist. Deshalb setzen viele Verfahren am fertigen Werkstück im Sinne einer Qualitätskontrolle an.

Ein weit verbreitetes Verfahren ist die Nital-Ätzung nach ISO 14104 (Fassung vom Juni 2014). Hierbei wird Nital, eine Mischung aus konzentrierter Salpetersäure und Äthanol, auf die zu untersuchenden Stellen des Werkstückes aufgebracht. An Stellen mit Schleifbrand kommt es zu selektiver Phasenätzung, die subjektiv, visuell ausgewertet wird. Die Ergebnisse dieses Verfahrens sind nicht sicher. Das Verfahren ist nicht automatisierbar und führt auf Grund der verwendeten Chemikalien zu Umweltbelastungen. Außerdem ist es nicht streng zerstörungsfrei. Zur Nitalätzung und zu Verfahren objektivierter Auswertung der Ätzergebnisse mit Hilfe von Bildverarbeitungseinrichtungen existiert umfangreiche Literatur.

Eine weitere Möglichkeit der Kontrolle des fertigen Werkstückes stellen photothermische Ermittlungen von Materialeigenschaften dar, wie sie in einer die Nachteile unterschiedlicher optischer Anordnungen vermeidenden Ausführung in der DE 10 2006 025 524 A1 beschrieben wird. Bei diesen Verfahren werden Spannungszustände im Festkörper, wie sie durch Schleifbrand verursacht werden, gesucht. Diese Verfahren sind mit einem erheblichen apparativen Aufwand verbunden. Die dabei zum Einsatz kommende Linsen- oder Faseroptik ist verschmutzungsanfällig und von der notwendigen Baugröße nur bedingt zur Untersuchung kleiner Geometrien geeignet.

Eine große Gruppe von Geräten zur Detektion von Schleifbrand in fertigen Produkten existiert für magnetische Materialien. Den größten Verbreitungsgrad haben hierbei Geräte, die den Barkhausen-Effekt nutzen. In der Literatur werden unterschiedliche Ausgestaltungen in der Erfassung des sogenannten Barkhausen-Rauschens dargelegt (siehe beispielsweise EP 0 100 009 A1, DE 43 338 30 A1, DE 10 2012 205 676 A1).

Ebenfalls unter Ausnutzung der Eigenschaften magnetischer Materialien werden Verfahren zur Detektion von Schleifbrand eingesetzt, die mit Wirbelstrom arbeiten.

Während der Barkhausen-Effekt die Gewinnung von qualitativen Angaben zum Schleifbrand gestattet, lassen die Wirbelstromverfahren lediglich eine Gut/Schlecht-Aussage zu.

Beiden Verfahren ist eine Beaufschlagung des Prüflings mit externen Magnetfeldern gemeinsam, die zu Aufmagnetisierungen führt. Da aufmagnetisierte Werkstücke in der weiteren Prozesskette in der Regel nicht erwünscht sind, müssen beide Verfahren mit einer Einrichtung zur Entmagnetisierung kombiniert werden. Das erhöht den apparativen Aufwand bei der Anwendung der genannten Verfahren und liefert zusätzlich nur unsichere Ergebnisse im Bezug auf den Grad der Entmagnetisierung.

Aufgabe der Erfindung ist es, die Nachteile nach dem Stand der Technik zu beseitigen. Es soll insbesondere ein Verfahren angegeben werden, das eine automatisierte Prüfung ferromagnetischer Werkstücke, insbesondere von Ringen wie Synchronringen und Lagerringen, auf Inhomogenitäten in kurzer Zeit gestattet. Das Verfahren soll eine zuverlässige Prüfung der Werkstücke ermöglichen, ohne dass die Werkstücke einer Aufmagnetisierung ausgesetzt sind. Es soll ferner eine Vorrichtung angegeben werden, die zur Ausführung des Verfahrens geeignet ist.

Diese Aufgabe wird durch die Merkmale der Ansprüche 1 und 11 gelöst. Zweckmäßige Ausgestaltungen der Erfindungen ergeben sich aus den Merkmalen der Unteransprüche.

Nach Maßgabe der Erfindung ist ein Verfahren zur Prüfung von Werkstücken aus einem ferromagnetischen Material, die eine Außenseite und eine Innenseite aufweisen, auf Inhomogenitäten vorgesehen, bei dem mittels eines Magnetfeldsensors die remanente magnetische Feldstärke des Werkstückes ortsabhängig gemessen wird. Dabei werden der Magnetfeldsensor und das Werkstück relativ zueinander bewegt und der Gradient der Änderung des Magnetfeldes bestimmt.

Vor oder während des Verfahrens wird kein künstliches äußeres magnetisches Feld an das Werkstück angelegt.

Bei Inhomogenitäten kann es sich insbesondere um Inhomogenitäten im Material eines Werkstückes handeln. Bei Inhomogenitäten kann es sich beispielsweise um Risse, um Schleifbrand, um Materialveränderungen unterhalb der Oberflächen von Werkstücken, um sogenannte Spannungszonen (stress concentration zones - SCZ) im Material oder Kombinationen dieser Inhomogenitäten handeln. Die Erfindung ist somit zur Rissprüfung von Werkstücken geeignet. Sie ist ferner zur Detektion von Schleifbrand an Werkstücken geeignet. Die Erfindung ist ferner zur gleichzeitigen Prüfung von Werkstücken auf Freiheit von Rissen und Schleifbrand geeignet. Die Erfindung ist darüber hinaus zur gleichzeitigen Prüfung von Werkstücken auf Freiheit von Rissen, Schleifbrand und andere Inhomogenitäten geeignet.

Das erfindungsgemäße Verfahren ermöglicht damit die zerstörungsfreie und berührungslose Bestimmung, ob ein Werkstück Inhomogenitäten, insbesondere Risse, Schleifbrand oder beides, aufweist. Das Verfahren kann als automatisiertes Verfahren ausgeführt werden, wodurch eine hohe Zahl von Werkstücken auf Freiheit von Inhomogenitäten, insbesondere von Rissen, Schleifbrand oder beidem, geprüft werden kann. Das erfindungsgemäße Verfahren erlaubt die Prüfung von 500 oder mehr Werkstücken pro Stunde, insbesondere von 1000 oder mehr Werkstücken pro Stunde.

Bei dem erfindungsgemäßen Verfahren wird die remanente magnetische Feldstärke ortsabhängig am Werkstück gemessen. Damit wird dessen Restmagnetisierung bestimmt. Zur Ausführung des erfindungsgemäßen Verfahrens wird kein äußeres magnetisches Feld angelegt. Ein Erregerfeld ist nicht nötig und auch nicht vorgesehen. Das einzige vorhandene äußere Feld ist das Erdmagnetfeld. Eine Fremderregung erfolgt somit nicht. Da kein Erregerfeld erforderlich ist, vermindert sich der apparative Aufwand zur Durchführung des erfindungsgemäßen Verfahrens. Eine Restmagnetisierung oder Aufmagnetisierung des Werkstückes wird bei der Ausführung des erfindungsgemäßen Verfahrens vermieden.

Erfindungsgemäß kommt ein Magnetfeldsensor zum Einsatz, der die aktuelle, ortsabhängige magnetische Feldstärke am Prüfobjekt, z. B. dem Werkstück, misst. Die dabei ermittelten Werte stellen die Resultierende zwischen der Orientierung der Weissschen Bezirke in einer gewissen Umgebung um den Messort herum und dem Erdmagnetfeld dar. Dadurch, dass die Weissschen Bezirke ihre Orientierung durch Änderung eines äußeren Magnetfeldes ändern, das Erdmagnetfeld in diesem Zusammenhang als konstant angesehen werden kann, registriert der Magnetfeldsensor einen Zustand des Werkstückes, der seit der letzten Einwirkung eines äußeren Magnetfeldes, verschieden vom Erdmagnetfeld, erfolgt ist. Die erfindungsgemäß eingesetzte Messmethode wird daher auch als "Metal Magnetic Memory Method" bezeichnet.

Das erfindungsgemäße Verfahren nutzt den Umstand, dass strukturelle Inhomogenitäten eines magnetischen Materials zu lokalen Änderungen der magnetischen Feldstärke im Vergleich zur homogenen Umgebung führen. Solche Inhomogenitäten sind beispielsweise Risse oder entstehen in der Folge von Schleifbrand. Zur Bestimmung von Inhomogenität wird der Gradient der Magnetfeldänderung in Bewegungsrichtung des Magnetfeldsensors festgestellt. Dieser Gradient wird dann mit dem Vorhandensein eines Ortes mit homogenem oder inhomogenem Material, hier also Rissen oder Schleifbrand, korreliert. Das erfindungsgemäße Verfahren erlaubt eine zuverlässige und schnelle Prüfung von Werkstücken, also von Prüflingen, auf Inhomogenitäten, insbesondere eine Prüfung auf Freiheit von Rissen oder Schleifbrand. Das erfindungsgemäße Verfahren erlaubt insbesondere eine gleichzeitig zuverlässige und schnelle Prüfung von Werkstücken, auf Freiheit von Rissen und Schleifbrand.

Der Gradient der Magnetfeldänderung in Bewegungsrichtung des Magnetfeldsensors kann nach der folgenden Gleichung bestimmt werden:

$$T = \frac{dH}{dx}$$

wobei T der Gradient der Magnetfeldänderung in Bewegungsrichtung des Magnetfeldsensors ist, H die remanente magnetische Feldstärke und x die Länge der Strecke ist, die der Magnetfeldsensor während der Messung zurücklegt.

Das erfindungsgemäße Verfahren ist insbesondere für Werkstücke geeignet, die Hohlkörper sind. Hohlkörper weisen eine Innenseite und eine Außenseite auf. Solche Werkstücke sind beispielweise Werkstücke, die eine rohr- oder ringförmige Basisgeometrie aufweisen. Der Begriff "Basisgeometrie" soll verdeutlichen, dass die Gestalt eines Werkstückes von der idealen Geometrie eines Rohres oder Ringes abweichen kann (aber nicht muss). Beispielweise können sich an der Innenseite oder Außenseite eines Werkstückes Elemente wie beispielsweise Ausnehmungen, Auskragungen oder andere Elemente befinden. Die Werkstücke müssen keine homogene Gestalt aufweisen. Das Verfahren ist insbesondere für die Prüfung von Werkstücken geeignet, die keine homogene Gestalt aufweisen, insbesondere zur Rissprüfung und/oder Prüfung auf Schleifbrand. Unter einer homogenen Gestalt wird eine geometrische Ausformung verstanden, die über ihre gesamte Länge im Wesentlichen geometrisch unverändert bleibt. Das ist bei einem rohr- oder ringförmigen Werkstück die Längsachse. Werkstücke, die keine homogene Gestalt aufweisen, sind Werkstücke mit einer komplexen Gestalt. Eine komplexe Gestalt ist eine kritische Gestalt, weil die Prüfung eines Werkstückes mit einer komplexen Gestalt erhöhte Anforderungen im Hinblick auf die Auswahl der Messmethode und die Anordnung der Messinstrumente stellt.

Werkstücke, die eine rohr- oder ringförmige Basisgeometrie aufweisen, haben beispielsweise eine Länge größer 0 und kleiner gleich 10 m. Sie können beispielsweise einen Innendurchmesser von 5 bis 200 mm, vorzugsweise 10 bis 150 mm, stärker bevorzugt 20 bis 120 mm, noch stärker bevorzugt 50 bis 100 mm und besonders bevorzugt 80 bis 100 mm aufweisen.

Vorzugsweise sind die Werkstücke einstückig geformte Werkstücke. Beispiele für Werkstücke, deren Freiheit auf Inhomogenitäten mittels des erfindungsgemäßen Verfahrens geprüft werden kann, sind Ringe, Rohre, Röhren und Hohlzylinder. Beispiele für Ringe umfassen Synchronringe, Kolbenringe, Kugellagergehäuse, Lagerringe von Kugellagern und Lagerringe von Wälzlagern. Beispiele für Werkstücke, deren Rissfreiheit mittels des erfindungsgemäßen Verfahrens geprüft werden kann, sind insbesondere Ringe wie Synchronringe, Kolbenringe und Kugellagergehäuse, bevorzugt Synchronringe. Beispiele für Werkstücke, die auf Schleifbrand mittels des erfindungsgemäßen Verfahrens geprüft werden können, sind insbesondere Ringe, insbesondere Lagerringe von Kugellagern, Lagerringe von Wälzlagern, aber auch Rohre, Röhren und Hohlzylinder, bevorzugt Ringe, insbesondere Lagerringe von Kugellagern, Lagerringe von Wälzlagern, besonders bevorzugt Lagerringe von Kugellagern (die hierin auch als Kugellagerringe bezeichnet werden). Das erfindungsgemäße Verfahren ist für Werkstücke aus ferromagnetischen Materialien, insbesondere für Werkstücke aus Eisen oder einer eisenhaltigen Legierung wie beispielsweise Stahl geeignet. Es ist beispielsweise für Synchronringe oder Lagerringe, insbesondere Kugellagerringe, aus Stahl geeignet.

Das erfindungsgemäße Verfahren ermöglicht eine Klassifikation der Werkstücke in Werkstücke ohne Inhomogenitäten und Werkstücke mit Inhomogenitäten. Dabei ist ein Werkstück ein Werkstück ohne Inhomogenitäten, wenn der Gradient der Änderung des Magnetfeldes einen vorgegebenen Schwellwert nicht überschreitet. Das erfindungsgemäße Verfahren ermöglicht in einer ersten Ausführungsform eine Klassifikation der Werkstücke in rissfreie Werkstücke und nicht-rissfreie Werkstücke. Dabei ist ein Werkstück ein rissfreies Werkstück, wenn der Gradient der Änderung des Magnetfeldes einen vorgegebenen Schwellwert nicht überschreitet. Das erfindungsgemäße Verfahren ermöglicht in einer zweiten Ausführungsform eine Klassifikation der Werkstücke in Werkstücke ohne Schleifbrand und Werkstücke mit Schleifbrand. Dabei ist ein Werkstück ein Werkstück ohne Schleifbrand, wenn der Gradient der Änderung des Magnetfeldes einen vorgegebenen Schwellwert nicht überschreitet. In einer dritten Ausführungsform ermöglicht das erfindungsgemäße Verfahren eine Klassifikation der Werkstücke in Werkstücke ohne Risse und Schleifbrand und Werkstücke mit Rissen und/oder Schleifbrand.

In einer Ausführungsform des erfindungsgemäßen Verfahrens wird nur ein Magnetfeldsensor eingesetzt, um die remanente magnetische Feldstärke des Werkstückes zu messen. Es kann vorgesehen sein, dass der Magnetfeldsensor die Innenseite oder die Außenseite des Werkstückes überstreicht. Der Begriff "überstreichen" ist dabei so zu verstehen, dass der Magnetfeldsensor die remanente magnetische Feldstärke des Werkstückes erfasst, ohne dabei das Werkstück zu berühren.

In einer anderen Ausführungsform des erfindungsgemäßen Verfahrens ist zumindest ein weiterer Magnetfeldsensor zur ortsabhängigen Messung der remanenten magnetischen Feldstärke des Werkstückes vorgesehen. Mit einem oder mehreren weiteren Magnetfeldsensoren kann die Aussagesicherheit im Bezug auf die Freiheit von Inhomogenitäten, insbesondere Rissfreiheit, Freiheit von Schleifbrand oder beidem, der Werkstücke weiter erhöht werden. Dabei kann ein Magnetfeldsensor die Innenseite des Werkstückes überstreichen. Der weitere Magnetfeldsensor kann die Außenseite des Werkstückes überstreichen.

Sind mehrere Magnetfeldsensoren zur ortsabhängigen Messung der remanenten magnetischen Feldstärke des Werkstückes vorgesehen, so werden die Messergebnisse vorzugsweise unabhängig voneinander ausgewertet. Es kann daher vorgesehen sein, dass ein Werkstück nur dann als ein Werkstück ohne Inhomogenitäten, insbesondere als rissfreies Werkstück, Werkstück ohne Schleifbrand oder rissfreies Werkstück ohne Schleifbrand, klassifiziert wird, wenn

- der Gradient der Änderung des Magnetfeldes, der mittels des die Innenseite des Werkstückes überstreichenden Magnetfeldsensors gemessen wird, einen vorgegebenen Schwellwert nicht überschreitet; und

- der Gradient der Änderung des Magnetfeldes, der mittels des die Außenseite des Werkstückes überstreichenden Magnetfeldsensors gemessen wird, einen vorgegebenen Schwellwert nicht überschreitet.

Bei dem oder den Magnetfeldsensoren kann es sich um jeden Magnetfeldsensor handeln, der zur Bestimmung der remanenten magnetischen Feldstärke eingesetzt werden kann. Geeignete Magnetfeldsensoren sind beispielsweise Saturationskern-Magnetometer, die auch als Förster-Sonden bezeichnet werden.

Zur Messung der ortsabhängigen remanenten magnetischen Feldstärke ist eine Relativbewegung zwischen dem bzw. den Magnetfeldsensoren und dem Werkstück, dessen remanente magnetische Feldstärke ortsabhängig gemessen werden soll, erforderlich. Die Geschwindigkeit der Relativbewegung liegt vorzugsweise zwischen 5 und 100 m/s, stärker bevorzugt zwischen 10 und 80 m/s und beträgt besonders bevorzugt 20 m/s. Die Geschwindigkeit der Relativbewegung begrenzt den Zeittakt, mit dem eine Prüfung von Werkstücken durchgeführt werden kann, nicht. Dieser Zeittakt kann beispielsweise bei 3 bis 6 s liegen.

Es kann vorgesehen sein, dass die magnetische Feldstärke des Werkstückes, bezogen auf die Ausdehnung des Werkstückes, in vorgegebenen Abständen bestimmt wird. Die Abstände sind vorzugsweise äquidistante Abstände. Beispielsweise kann eine solche Messung in einem Abstand vorgenommen werden, der zwischen 0,5 mm und 2 m liegt. Der Abstand kann somit beispielsweise 1 m betragen. Alternativ kann vorgesehen sein, dass die magnetische Feldstärke des Werkstückes in einem vorgegebenen Zeittakt bestimmt wird. Beispielsweise kann eine solche Messung in einem Zeittakt vorgenommen werden, der zwischen 1 s und 10 min liegt. Der Zeittakt kann beispielsweise 1 min betragen. Das erfindungsgemäße Verfahren erlaubt somit die äquidistante oder getaktete Aufnahme der ortsabhängigen Magnetfeldwerte.

Für die Prüfung von Hohlkörpern kann ein Magnetfeldsensor im Innenraum des Hohlkörpers, der den gesamten Innenraum durch Eigenbewegung oder Drehen des Innenraumes überstreicht, ausreichend sein. Handelt es sich bei dem Hohlkörper um einen Ring, so wird der Innenraum auch als Innenkreis bezeichnet. Zur weiteren Steigerung der Aussagesicherheit in Bezug auf Freiheit von Inhomogenitäten können jedoch weitere Magnetfeldsensoren um den Hohlkörper herum montiert sein und einzeln ausgewertet werden. Für die Prüfung von Ringen kann ein Magnetfeldsensor am Innenkreis des Ringes, der den gesamten Kreis durch Eigenbewegung oder Drehen des Ringes überstreicht, ausreichend sein. Zur weiteren Steigerung der Aussagesicherheit in Bezug auf Freiheit von Inhomogenitäten können jedoch weitere Magnetfeldsensoren um den Hohlkörper herum montiert sein und einzeln ausgewertet werden. Beispielsweise kann für die Rissprüfung eines Stahlsynchronringes ein Magnetfeldsensor am Innenkreis des Ringes, der den gesamten Kreis durch Eigenbewegung oder Drehen des Ringes überstreicht, ausreichend sein. Zur weiteren Steigerung der Aussagesicherheit in Bezug auf Rissfreiheit können jedoch weitere Magnetfeldsensoren um den Synchronring herum montiert sein und einzeln ausgewertet werden. Für die Prüfung eines Ringes auf Schleifbrand kann ebenfalls ein Magnetfeldsensor am Innenkreis des Ringes, der den gesamten Kreis durch Eigenbewegung oder Drehen des Ringes überstreicht, ausreichend sein. Zur weiteren Steigerung der Aussagesicherheit in Bezug auf die Freiheit von Schleifbrand können jedoch weitere Magnetfeldsensoren um den Ring herum montiert sein und einzeln ausgewertet werden.

Das erfindungsgemäße Verfahren ist zur Erkennung von jeder Art von Inhomogenitäten, wie Rissen, Schleifbrand oder beiden, in einem Werkstück aus einem ferromagnetischen Material geeignet. Risse umfassen insbesondere durchgehende Risse und Anrisse, ohne dass diese Aufzählung abschließend ist. Mittels des erfindungsgemäßen Verfahrens kann darüber hinaus auch die Lage der Inhomogenität, insbesondere des Risses oder des Schleifbrandes, am Werkstück festgestellt werden.

Nach Maßgabe der Erfindung ist ferner eine Vorrichtung zur Prüfung von Werkstücken aus einem ferromagnetischen Material, die eine Außenseite und eine Innenseite aufweisen, insbesondere von Ringen, wie Synchronringen oder Lagerringen, auf Inhomogenitäten vorgesehen, die einen Magnetfeldsensor zur ortsabhängigen Messung der remanenten magnetischen Feldstärke des Werkstückes und eine Auswerteeinheit zur Bestimmung des Gradienten der Änderung des Magnetfeldes aufweist. Der Magnetfeldsensor ist dabei relativ zu dem Werkstück beweglich. In einer ersten Ausführungsform der Erfindung ist die erfindungsgemäße Vorrichtung eine Vorrichtung zur Rissprüfung von Werkstücken aus einem ferromagnetischen Material, die eine Außenseite und eine Innenseite aufweisen, insbesondere von Synchronringen. In einer zweiten Ausführungsform ist die erfindungsgemäße Vorrichtung eine Vorrichtung zur Detektion von Schleifbrand an Werkstücken aus einem ferromagnetischen Material, die eine Außenseite und eine Innenseite aufweisen, insbesondere von Ringen.

Die erfindungsgemäße Vorrichtung weist keine Einrichtung auf, mit der ein künstliches äußeres magnetisches Feld an das Werkstück angelegt werden kann.

Es kann vorgesehen sein, dass der Magnetfeldsensor so angeordnet ist, dass er auf die Innenseite oder die Außenseite des Werkstückes gerichtet ist. Auf diese Weise kann er die Seite, auf die er gerichtet ist, überstreichen. Die erfindungsgemäße Vorrichtung kann zumindest einen weiteren Magnetfeldsensor aufweisen, der auf die andere Seite des Werkstückes gerichtet ist. Er kann dabei die Seite überstreichen, die nicht bereits von dem anderen Magnetfeldsensor überstrichen wird.

Jeder Magnetfeldsensor ist mit einer Auswerteeinheit zur Bestimmung des Gradienten der Änderung des Magnetfeldes verbunden. Dabei kann jeder Magnetfeldsensor mit einer gesonderten Auswerteeinheit verbunden sein. Es kann jedoch auch eine gemeinsame Auswerteinheit vorgesehen sein, mit der alle oder mehrere der Magnetfeldsensoren verbunden sind. Die Auswerteeinheit kann die Messwerte von dem oder den Magnetfeldsensoren empfangen und auswerten. Die Auswertung kann die Bestimmung des Gradienten der Änderung des Magnetfeldes umfassen.

Die erfindungsgemäße Vorrichtung kann ferner eine Datenverarbeitungseinrichtung umfassen. Dabei kann es sich um einen Computer, beispielsweise einen Personal Computer, handeln. Die Auswerteeinheiten sind dabei mit der Datenverarbeitungseinrichtung drahtgebunden oder drahtlos verbunden, so dass die Messwerte der remanenten magnetischen Feldstärke, die berechneten Gradienten der Änderung des Magnetfeldes oder beides an die Datenverarbeitungseinrichtung übertragen werden können. Die Datenverarbeitungseinrichtung kann ein Programm ausführen, das die Klassifikation der Werkstücke in Werkstücke ohne Inhomogenitäten, insbesondere ohne Risse und Schleifbrand, und Werkstücke mit Inhomogenitäten, insbesondere mit Rissen, Schleifbrand oder beiden, anhand der berechneten Gradienten der Änderung des Magnetfeldes ermöglicht. Die Datenverarbeitungseinrichtung kann im Falle einer Rissprüfung ein Programm ausführen, das die Klassifikation der Werkstücke in rissfreie Werkstücke und nichtrissfreie Werkstücke anhand der berechneten Gradienten der Änderung des Magnetfeldes ermöglicht. Die Datenverarbeitungseinrichtung kann im Falle einer Prüfung auf Schleifbrand ein Programm ausführen, das die Klassifikation der Werkstücke in Werkstücke ohne Schleifbrand und Werkstücke mit Schleifbrand anhand der berechneten Gradienten der Änderung des Magnetfeldes ermöglicht.

Die erfindungsgemäße Vorrichtung kann Einrichtungen zur automatischen Zuführung und Abführung von Werkstücken, insbesondere von Ringen, wie Synchronringen oder Lagerringen, umfassen. Sie kann ferner Einrichtungen zur Positionierung der Werkstücke in Bezug auf den oder die Magnetfeldsensoren umfassen. Sie kann außerdem Einrichtungen zur Bewegung des oder der Magnetfeldsensoren relativ zu dem Werkstück, das auf Inhomogenitäten wie Risse und/oder Schleifbrand untersucht werden soll, aufweisen. Die erfindungsgemäße Vorrichtung kann weiterhin eine Steuerungseinheit zum Steuern von Komponenten und Einrichtungen der Vorrichtung aufweisen. Die erfindungsgemäße Vorrichtung kann ein Prüfautomat sein.

Die erfindungsgemäße Vorrichtung kann in einem beliebigen Zeittakt betrieben werden. Vorzugsweise liegt der Zeittakt zwischen 1 und 10 s, bevorzugt zwischen 3 und 6 s. Unter einem Zeittakt wird die Zeit verstanden, die erforderlich ist, um die Messung der ortsabhängigen remanenten magnetischen Feldstärke eines ersten Werkstückes durchzuführen, das dann durch ein zweites Werkstück ersetzt wird, dessen ortsabhängige remanente magnetische Feldstärke wiederum gemessen wird.

Für die Kontrolle eines Hohlkörpers wie eines Ringes kann die erfindungsgemäße Vorrichtung einen Magnetfeldsensor im Innenraum des Hohlkörpers, der den gesamten Kreis durch Eigenbewegung oder Drehen des Ringes überstreicht, aufweisen. Zur weiteren Steigerung der Aussagesicherheit in Bezug auf die Freiheit von Inhomogenitäten können weitere Magnetfeldsensoren um den Hohlkörper herum montiert sein und einzeln ausgewertet werden.

Ist der Hohlkörper ein Ring, so kann es sich bei dem Innenraum um den Innenkreis des Ringes handeln.

Für die Kontrolle beispielsweise eines Ringes kann die erfindungsgemäße Vorrichtung einen Magnetfeldsensor am Innenkreis des Ringes, der den gesamten Kreis durch Eigenbewegung oder Drehen des Ringes überstreicht, aufweisen. Zur weiteren Steigerung der Aussagesicherheit in Bezug auf die Freiheit von Rissen und/oder Schleifbrand können weitere Magnetfeldsensoren um den Ring herum montiert sein und einzeln ausgewertet werden. Bei dem Ring kann es sich beispielsweise um einen Lagerring, insbesondere um einen Lagerring von Kugellagern, oder einen Synchronring handeln.

Für die Kontrolle eines Stahlsynchronringes kann die erfindungsgemäße Vorrichtung einen Magnetfeldsensor am Innenkreis des Stahlsynchronringes, der den gesamten Kreis durch Eigenbewegung oder Drehen des Ringes überstreicht, aufweisen. Zur weiteren Steigerung der Aussagesicherheit in Bezug auf die Freiheit von Imhomogenitäten, wie die Rissfreiheit und/oder Freiheit von Schleifbrand, können weitere Magnetfeldsensoren um den Synchronring herum montiert sein und einzeln ausgewertet werden.

Die erfindungsgemäße Vorrichtung ist insbesondere zur Ausführung des erfindungsgemäßen Verfahrens geeignet. Die erfindungsgemäße Vorrichtung kann eine automatisierte Vorrichtung sein, die zur automatisierten Ausführung des erfindungsgemäßen Verfahrens geeignet ist.

Das erfindungsgemäße Verfahren und die erfindungsgemäße Vorrichtung ermöglichen eine zuverlässige und produktive Kontrolle von Werkstücken auf Inhomogenitäten. Erfindungsgemäß wird dabei nur die Restmagnetisierung des jeweiligen Werkstücks ausnutzt, um festzustellen, ob das Werkstück frei von Inhomogenitäten ist oder nicht.

Das erfindungsgemäße Verfahren und die erfindungsgemäße Vorrichtung sind in einer ersten Ausführungsform insbesondere zur Rissprüfung von Synchronringen geeignet. Das erfindungsgemäße Verfahren und die erfindungsgemäße Vorrichtung sind in einer zweiten Ausführungsform insbesondere zur Detektion von Schleifbrand an Ringen wie Lagerringen, insbesondere Kugellagerringen, geeignet.

Die Erfindung wird nachstehend anhand von Ausführungsbeispielen, die die Erfindung nicht einschränken sollen, unter Bezugnahme auf die Zeichnungen näher erläutert. Dabei zeigen

Fig. 1    ein Beispiel eines Synchronringes;

Fig. 2    ein Beispiel eines Lagerringes;

Fig. 3    eine schematische Darstellung einer Ausführungsform einer erfindungsgemäßen Vorrichtung;

Fig. 4    ein Diagramm, das den Gradienten der Änderung des Magnetfeldes in Abhängigkeit vom Ort bei einem Werkstück ohne Inhomogenitäten zeigt;

Fig. 5    ein Diagramm, das den Gradienten der Änderung des Magnetfeldes in Abhängigkeit vom Ort bei einem Werkstück mit Inhomogenitäten zeigt; und

Fig. 6    ein weiteres Diagramm, das den Gradienten der Änderung des Magnetfeldes in Abhängigkeit vom Ort bei einem Werkstück ohne Inhomogenitäten zeigt.

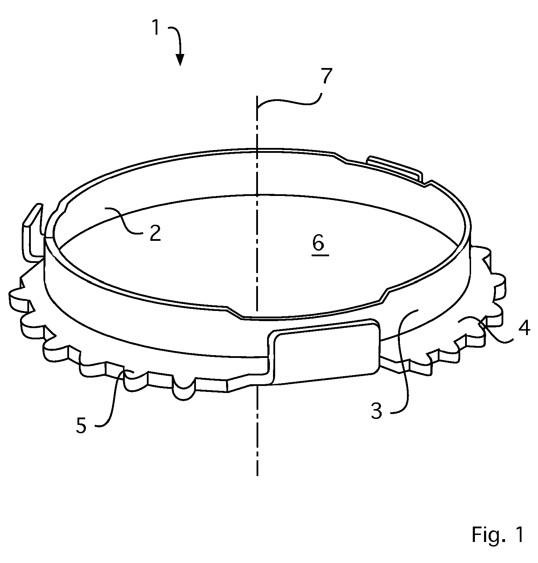

Der in Fig. 1 gezeigte Stahlsynchronring 1 veranschaulicht ein Werkstück, das auf Inhomogenitäten wie Rissbildung mittels des erfindungsgemäßen Verfahrens und der erfindungsgemäßen Vorrichtung untersucht werden kann. Der Synchronring 1 ist ein Hohlkörper mit einer ringförmigen Basisgeometrie. Der Hohlkörper weist eine Innenseite 2 und eine Außenseite 3 auf. An der Außenseite 3 ist an einer Kante des Synchronringes 1 ein umlaufender Steg 4 mit Zähnen 5 ausgebildet. Die Innenseite 2 umschließt einen Innenraum 6. Aus diesem Grund hat der Synchronring 1 keine homogene geometrische Gestalt, sondere eine komplexe Gestalt in Bezug auf seine Längsachse 7.

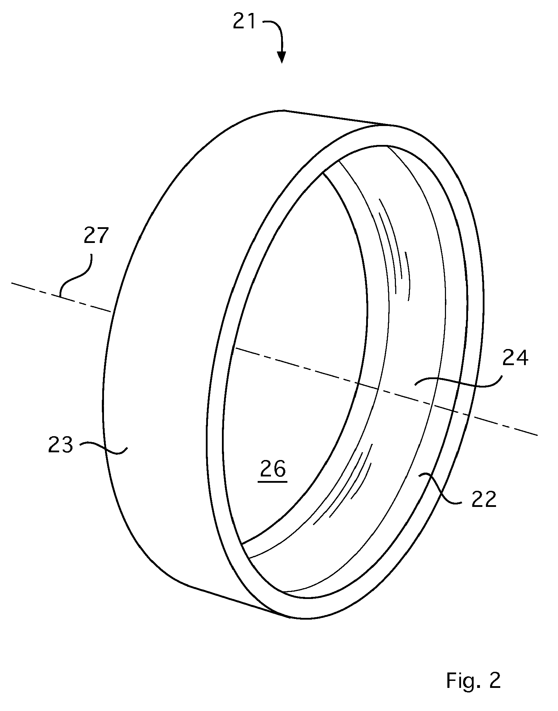

Der in Fig. 2 gezeigte Stahllagerring 21 veranschaulicht ein Werkstück, das auf Inhomogenitäten wie Schleifbrand mittels des erfindungsgemäßen Verfahrens und der erfindungsgemäßen Vorrichtung untersucht werden kann. Der Lagerring 21 ist ein Hohlkörper mit einer ringförmigen Basisgeometrie. Der Lagerring 21 weist eine Innenseite 22 und eine Außenseite 23 auf. An der Innenseite 22 des Lagerringes 21 ist eine umlaufende Führung 24 in Form einer Vertiefung ausgebildet. Die Innenseite 22 umschließt einen Innenraum 26. Aus diesem Grund hat der Lagerring 21 keine homogene geometrische Gestalt, sondern eine komplexe Gestalt.

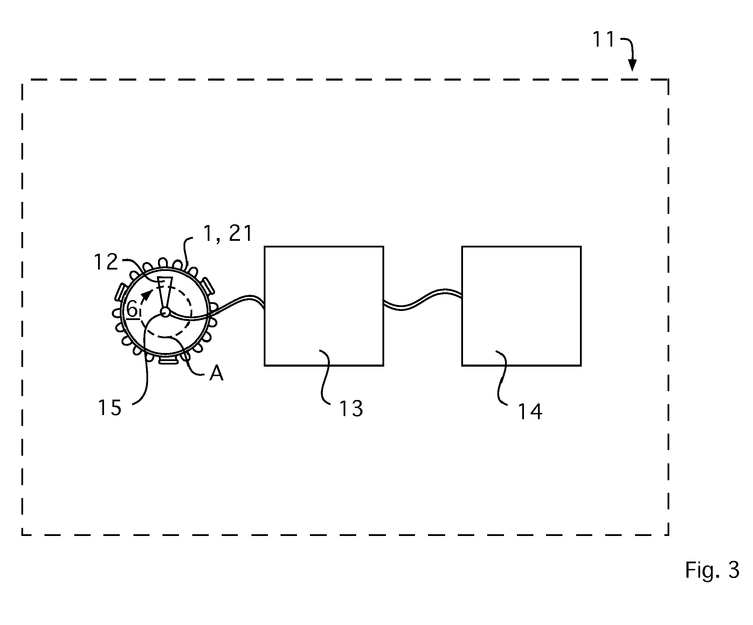

Für die Prüfung eines Synchronringes 1 weist die in Fig. 3 gezeigte Ausführungsform der erfindungsgemäßen Vorrichtung 11 einen Magnetfeldsensor 12 auf, der im Innenraum 6 des Stahlsynchronringes 1 angeordnet und auf die Innenseite 2 des Synchronringes 1 gerichtet ist. Der Magnetfeldsensor 12 kann dabei relativ zu dem Synchronring 1 bewegt werden, so dass er die gesamte Innenseite 2 des Synchronringes 1 überstreicht. Dabei kann entweder der Magnetfeldsensor 12 gedreht werden oder aber der Synchronring 1. In Fig. 3 ist eine Führungseinrichtung 15 gezeigt, die den Magnetfeldsensor 12 auf einer Kreisbahn, deren Mittelpunkt auf der Längsachse 7 des Synchronring 1 liegt, (Pfeil A) bewegt. Dabei überstreicht der Magnetfeldsensor 12 die Innenseite 2 des Synchronringes 1. Die Bewegung kann 360° betragen. In einer anderen Ausführungsform wird der Synchronring um seine Längsachse 7 bewegt, während der Magnetfeldsensor 12 starr angeordnet ist. Der Magnetfeldsensor 12 ist mit einer Auswerteeinheit 13 verbunden. Die Auswerteinheit 13 dient zur Bestimmung des Gradienten der Änderung des Magnetfeldes. Der Gradient wird auf Basis der ortsabhängig gemessenen remanenten magnetischen Feldstärke bestimmt. Die Auswerteeinheit 13 wiederum ist mit einem Computer 14 verbunden, der ein Programm ausführt, mit dem die Klassifikation des Synchronrings 1 als rissfreier Synchronring oder als nicht-rissfreier Synchronring vorgenommen wird. Es kann alternativ vorgesehen sein, dass die Auswerteinheit 13 ein Programm ausführt, mit dem die Klassifikation des Synchronrings 1 als Synchronring ohne Inhomogenitäten, insbesondere ohne Risse und Schleifbrand, oder als Synchronring mit Inhomogenitäten, als mit Rissen und/oder Schleifbrand, vorgenommen wird.

Die erfindungsgemäße Vorrichtung 11 kann in gleicher Weise für die Prüfung eines Lagerrings 21 eingesetzt werden. Dazu weist die in Fig. 3 gezeigte Ausführungsform der erfindungsgemäßen Vorrichtung 11 einen Magnetfeldsensor 12 auf, der im Innenraum 26 des Lagerringes 21 angeordnet und auf die Innenseite 22 des Lagerringes 21 gerichtet ist. Der Magnetfeldsensor 12 kann dabei relativ zu dem Lagerring 21 bewegt werden, so dass er die gesamte Innenseite 22 des Lagerringes 1 überstreicht. Dabei kann entweder der Magnetfeldsensor 12 gedreht werden oder aber der Lagerring 21. In Fig. 3 ist eine Führungseinrichtung 15 gezeigt, die den Magnetfeldsensor 12 auf einer Kreisbahn, deren Mittelpunkt auf der Längsachse 27 des Lagerrings 21 liegt, (Pfeil A) bewegt. Dabei überstreicht der Magnetfeldsensor 12 die Innenseite 22 des Lagerringes 21. Die Bewegung kann 360° betragen. In einer anderen Ausführungsform wird der Lagerring 21 um seine Längsachse 27 bewegt, während der Magnetfeldsensor 12 starr angeordnet ist. Der Magnetfeldsensor 12 ist mit einer Auswerteeinheit 13 verbunden. Die Auswerteeinheit 13 dient zur Bestimmung des Gradienten der Änderung des Magnetfeldes. Der Gradient wird auf Basis der ortsabhängig gemessenen remanenten magnetischen Feldstärke bestimmt. Die Auswerteeinheit 13 wiederum ist mit einem Computer 14 verbunden, der ein Programm ausführt, mit dem die Klassifikation des Lagerrings 21 als Lagerring ohne Schleifbrand oder als Lagerring mit Schleifbrand vorgenommen wird. Es kann alternativ vorgesehen sein, dass die Auswerteinheit 13 ein Programm ausführt, mit dem die Klassifikation des Lagerrings 21 als Lagerring ohne Inhomogenitäten, insbesondere ohne Risse und Schleifbrand, oder als Lagerring mit Inhomogenitäten, also mit Rissen und/oder Schleifbrand, vorgenommen wird.

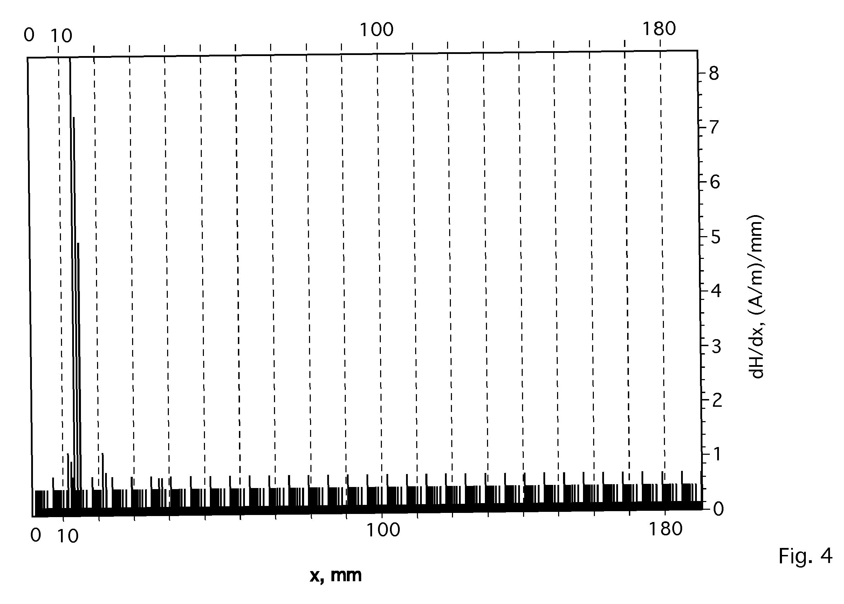

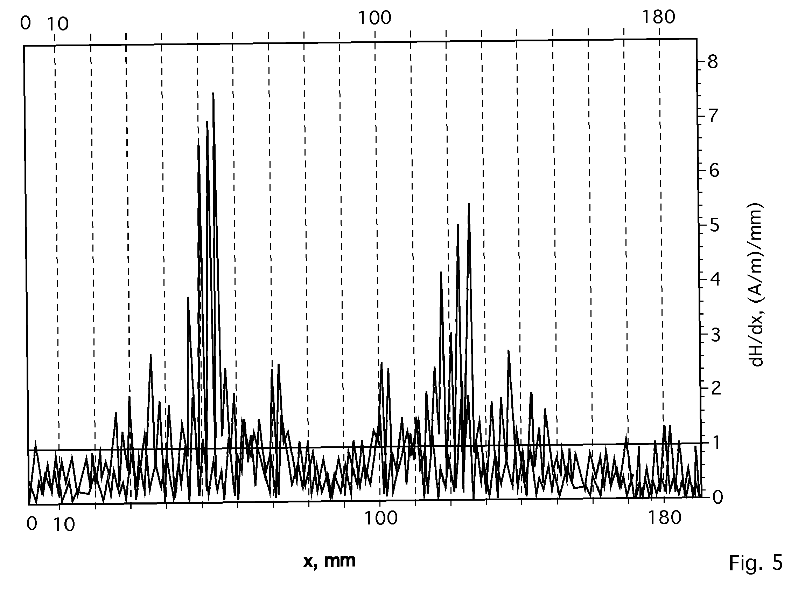

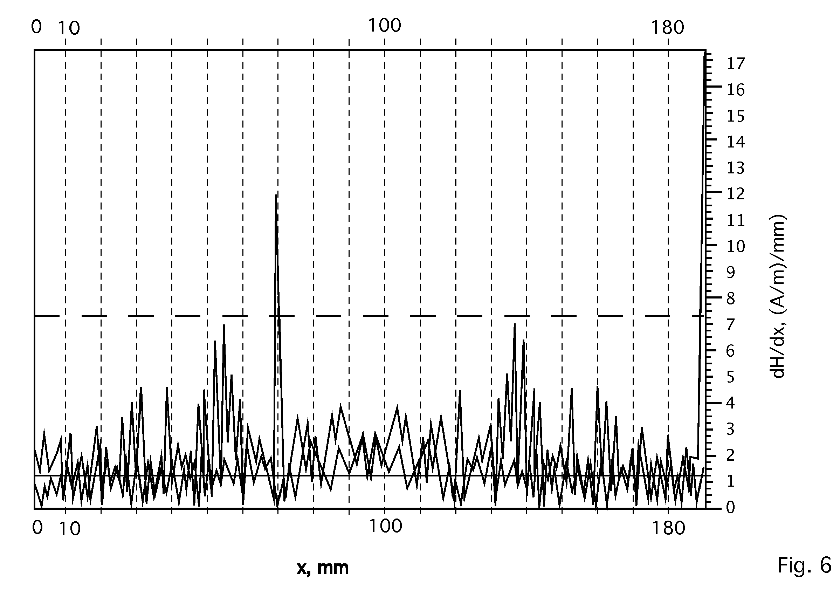

Die Figuren 4 bis 6 zeigen Diagramme, die den Gradienten T der Änderung des Magnetfeldes H in Abhängigkeit vom Ort x bei einem Synchronring 1 zeigen. Die Messergebnisse zeigen, dass der Synchronring rissfrei ist, wenn die gemessenen Gradienten unterhalb eines Schwellwertes von 1 liegen (Fig. 4; die Werte zwischen x = 100 und x = 200 sind ein Kalibriersignal). Sie sind nicht-rissfrei, wenn die gemessenen Gradienten über einem Schwellwert von 1 liegen (Figuren 5 und 6). Aus den Messergebnissen kann ebenfalls entnommen werden, ob der Synchronring 1 frei von anderen Inhomogenitäten wie Schleifbrand ist. Ähnliche Diagramme werden bei der Untersuchung eines Lagerringes 21 auf Schleifbrand erhalten.

Bezugszeichenliste

| 1 | Synchronring |
| 2 | Innenseite |
| 3 | Außenseite |
| 4 | Steg |
| 5 | Zahn |
| 6 | Innenraum |
| 7 | Längsachse |

| 11 | Vorrichtung |
| 12 | Magnetfeldsensor |
| 13 | Auswerteeinheit |
| 14 | Computer |
| 15 | Führungseinrichtung |

| 21 | Lagerring |
| 22 | Innenseite |
| 23 | Außenseite |
| 24 | Führung |
| 26 | Innenraum |
| 27 | Längsachse |

**Patentansprüche**

1. Verfahren zur Prüfung von Werkstücken (1, 21) aus einem ferromagnetischen Material, die eine Außenseite und eine Innenseite aufweisen, insbesondere von Ringen, auf Inhomogenitäten, **dadurch gekennzeichnet, dass** mittels eines Magnetfeldsensors (12) die remanente magnetische Feldstärke des Werkstückes (1, 21) ortsabhängig gemessen wird, wobei der Magnetfeldsensor (12) und das Werkstück (1, 21) relativ zueinander bewegt werden und der Gradient der Änderung des Magnetfeldes bestimmt wird.

2. Verfahren nach Anspruch 1, **dadurch gekennzeichnet, dass** es die Klassifikation der Werkstücke (1, 21) in Werkstücke ohne Inhomogenitäten und Werkstücke mit Inhomogenitäten umfasst, wobei ein Werkstück ein Werkstück ohne Inhomogenitäten ist, wenn der Gradient der Änderung des Magnetfeldes einen vorgegebenen Schwellwert nicht überschreitet.

3. Verfahren nach Anspruch 1 oder Anspruch 2, **dadurch gekennzeichnet, dass** der Magnetfeldsensor (12) die Innenseite (2, 22) oder die Außenseite (3, 23) des Werkstückes (1, 21) überstreicht.

**4.** Verfahren nach Anspruch 3, **dadurch gekennzeichnet, dass** ein weiterer Magnetfeldsensor die Seite (2, 3; 22, 23) des Werkstückes (1, 21) überstreicht, die nicht von dem anderen Magnetfeldsensor (12) überstrichen wird.

**5.** Verfahren nach Anspruch 4, **dadurch gekennzeichnet, dass** mittels des weiteren Magnetfeldsensors die remanente magnetische Feldstärke des Werkstückes (1, 21) ortsabhängig gemessen und der Gradient der Änderung des Magnetfeldes bestimmt wird, wobei ein Werkstück (1,21) ein Werkstück ohne Inhomogenitäten ist, wenn

- der Gradient der Änderung des Magnetfeldes, der mittels des die Innenseite (2) des Werkstückes (1) überstreichenden Magnetfeldsensors (12) gemessen wird, einen vorgegebenen Schwellwert nicht überschreitet; und
- der Gradient der Änderung des Magnetfeldes, der mittels des die Außenseite (3) des Werkstückes (1) überstreichenden Magnetfeldsensors gemessen wird, einen vorgegebenen Schwellwert nicht überschreitet.

**6.** Verfahren nach einem der vorstehenden Ansprüche, **dadurch gekennzeichnet, dass** die remanente magnetische Feldstärke des Werkstückes (1), bezogen auf die Ausdehnung des Werkstückes (1), in vorgegebenen Abständen bestimmt wird.

**7.** Verfahren nach einem der Ansprüche 1 bis 5, **dadurch gekennzeichnet, dass** die remanente magnetische Feldstärke des Werkstückes (1) in einem vorgegebenen Zeittakt bestimmt wird.

**8.** Verfahren nach einem der vorstehenden Ansprüche, **dadurch gekennzeichnet, dass** die Prüfung der Werkstücke (1, 21) auf Inhomogenitäten die Prüfung auf Risse und/oder die Prüfung auf Schleifbrand umfasst.

**9.** Verfahren nach einem der vorstehenden Ansprüche, **dadurch gekennzeichnet, dass** es ein Verfahren zur Rissprüfung von Werkstücken, insbesondere von Synchronringen, ist.

**10.** Verfahren nach einem der vorstehenden Ansprüche, **dadurch gekennzeichnet, dass** es ein Verfahren zur Prüfung von Werkstücken, insbesondere von Ringen, auf Schleifbrand ist.

**11.** Vorrichtung zur Prüfung von Werkstücken (1, 21) aus einem ferromagnetischen Material, die eine Außenseite (3, 23) und eine Innenseite (2, 22) aufweisen, insbesondere von Ringen, auf Inhomogenitäten, **dadurch gekennzeichnet, dass** sie einen Magnetfeldsensor (12) zur ortsabhängigen Messung der remanenten magnetischen Feldstärke des Werkstückes (1, 21), der relativ zu dem Werkstück (1, 21) beweglich ist, und eine Auswerteeinheit (13) zur Bestimmung des Gradienten der Änderung des Magnetfeldes aufweist.

**12.** Vorrichtung nach Anspruch 11, **dadurch gekennzeichnet, dass** der Magnetfeldsensor (12) so angeordnet ist, dass er auf die Innenseite (2, 22) oder die Außenseite (3, 23) des Werkstückes (1, 21) gerichtet ist.

**13.** Vorrichtung nach Anspruch 11 oder Anspruch 12, **dadurch gekennzeichnet, dass** sie einen weiteren Magnetfeldsensor aufweist, der auf die andere Seite (2, 3; 22, 23) des Werkstückes (1, 21) gerichtet ist.

**14.** Vorrichtung nach einem der Ansprüche 11 bis 13, **dadurch gekennzeichnet, dass** sie eine Vorrichtung zur Rissprüfung von Werkstücken, insbesondere von Synchronringen, ist.

**15.** Vorrichtung nach einem der Ansprüche 11 bis 14, **dadurch gekennzeichnet, dass** sie eine Vorrichtung zur Prüfung von Werkstücken, insbesondere von Ringen, auf Schleifbrand ist.

Fig. 1

Fig. 2

Fig. 3

EP 3 056 897 A1

Fig. 4

Fig. 5

Fig. 6

Europäisches Patentamt

European Patent Office

Office européen des brevets

**EUROPÄISCHER RECHERCHENBERICHT**

Nummer der Anmeldung

EP 16 15 5396

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | US 6 037 767 A (CRESCENZO ERIC [FR] ET AL)<br>14. März 2000 (2000-03-14)<br>* Spalte 6, Zeilen 26-32 *<br>* Spalte 1, Zeilen 9-10 *<br>* Spalte 14, Zeilen 44-50, 61-67 *<br>* Spalte 15, Zeilen 51-57 *<br>* Spalte 17, Zeilen 18-35, 56-67 *<br>----- | 1,3,4,<br>8-15<br>2,5-7 | INV.<br>G01N27/83 |
| X | GB 1 155 817 A (FORSTER F M O [DE])<br>25. Juni 1969 (1969-06-25)<br>* Seite 1, Zeilen 9-13 *<br>* Seite 2, Zeile 81 *<br>* Seite 2, Zeile 125 - Seite 3, Zeile 2 *<br>* Seite 4, Zeilen 71-73, 127-129 *<br>* Seite 5, Zeilen 2-10, 78-83 *<br>----- | 1,11 | |
| X | DE 10 2007 022053 A1 (FRAUNHOFER GES FORSCHUNG [DE])<br>13. November 2008 (2008-11-13)<br>* Absätze [0002], [0004], [0006], [0013], [0016], [0017], [0019] *<br>----- | 1,11 | |
| Y | US 3 528 003 A (FORSTER FRIEDRICH M O)<br>8. September 1970 (1970-09-08)<br>* Spalte 5, Zeilen 37-38 *<br>* Spalte 6, Zeilen 8-16 *<br>----- | 2,5 | RECHERCHIERTE SACHGEBIETE (IPC)<br><br>G01N |
| Y | EP 0 073 017 A1 (NUKEM GMBH [DE])<br>2. März 1983 (1983-03-02)<br>* Seite 4, Zeile 24 - Seite 5, Zeile 12 *<br>----- | 6,7 | |
| A | US 5 336 998 A (WATTS KENNETH J [US] ET AL) 9. August 1994 (1994-08-09)<br>* das ganze Dokument *<br>----- | 1-15 | |
| A | DE 37 09 143 A1 (NUKEM GMBH [DE])<br>29. September 1988 (1988-09-29)<br>* das ganze Dokument *<br>----- | 1-15 | |

-/--

Der vorliegende Recherchenbericht wurde für alle Patentansprüche erstellt

| Recherchenort | Abschlußdatum der Recherche | Prüfer |
|---|---|---|
| München | 8. Juni 2016 | Knoll, Stephan |

Europäisches
Patentamt
European
Patent Office
Office européen
des brevets

**EUROPÄISCHER RECHERCHENBERICHT**

Nummer der Anmeldung

EP 16 15 5396

| | **EINSCHLÄGIGE DOKUMENTE** | | | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) | |
| A | DE 10 2008 059663 B3 (V&M DEUTSCHLAND GMBH [DE]) 7. Januar 2010 (2010-01-07) * das ganze Dokument * ----- | 1-15 | | |
| A | EP 2 051 090 A2 (MTU AERO ENGINES GMBH [DE]) 22. April 2009 (2009-04-22) * das ganze Dokument * ----- | 1-15 | | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| München | 8. Juni 2016 | Knoll, Stephan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 16 15 5396

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2016

| Im Recherchenbericht angeführtes Patentdokument | Datum der Veröffentlichung | Mitglied(er) der Patentfamilie | Datum der Veröffentlichung |
|---|---|---|---|
| US 6037767 A | 14-03-2000 | AU 696274 B2 | 03-09-1998 |
| | | AU 6521196 A | 10-02-1997 |
| | | BR 9609514 A | 23-02-1999 |
| | | CA 2226631 A1 | 30-01-1997 |
| | | DE 69624708 D1 | 12-12-2002 |
| | | DK 0838031 T3 | 03-03-2003 |
| | | EP 0838031 A1 | 29-04-1998 |
| | | FR 2736719 A1 | 17-01-1997 |
| | | NO 980098 A | 10-03-1998 |
| | | US 6037767 A | 14-03-2000 |
| | | WO 9703353 A1 | 30-01-1997 |
| GB 1155817 A | 25-06-1969 | DE 1766529 A1 | 29-07-1971 |
| | | FR 1585918 A | 06-02-1970 |
| | | GB 1155817 A | 25-06-1969 |
| DE 102007022053 A1 | 13-11-2008 | KEINE | |
| US 3528003 A | 08-09-1970 | KEINE | |
| EP 0073017 A1 | 02-03-1983 | DE 3132808 A1 | 10-03-1983 |
| | | EP 0073017 A1 | 02-03-1983 |
| | | JP S5877653 A | 11-05-1983 |
| | | US 4538108 A | 27-08-1985 |
| US 5336998 A | 09-08-1994 | KEINE | |
| DE 3709143 A1 | 29-09-1988 | KEINE | |
| DE 102008059663 B3 | 07-01-2010 | AR 074661 A1 | 02-02-2011 |
| | | DE 102008059663 B3 | 07-01-2010 |
| | | EP 2350636 A1 | 03-08-2011 |
| | | US 2012098532 A1 | 26-04-2012 |
| | | WO 2010060415 A1 | 03-06-2010 |
| EP 2051090 A2 | 22-04-2009 | CA 2639306 A1 | 19-04-2009 |
| | | DE 102007050143 A1 | 23-04-2009 |
| | | EP 2051090 A2 | 22-04-2009 |
| | | US 2009102471 A1 | 23-04-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012002127 B3
- DE 4025552 C1
- DE 4119871 C1
- DE 4318102 A1
- DE 19544620 A1
- DE 102006025524 A1
- EP 0100009 A1
- DE 4333830 A1
- DE 102012205676 A1